## Europäisches Patentamt
## European Patent Office
## Office européen des brevets

(11) Publication number: **0 246 202**
A1

# EUROPEAN PATENT APPLICATION

(21) Application number: 87830163.9

(22) Date of filing: 04.05.87

(51) Int. Cl.³: **C 12 G 1/02**

(30) Priority: 05.05.86 IT 4798386

(43) Date of publication of application:
19.11.87 Bulletin 87/47

(84) Designated Contracting States:
AT BE CH DE ES FR GR LI LU NL

(71) Applicant: Straffi, Ivo
Via Cinque Archi Km. 3
I-00049 Velletri(IT)

(72) Inventor: Straffi, Ivo
Via Cinque Archi Km. 3
I-00049 Velletri(IT)

(74) Representative: Sarpi, Maurizio
Studio FERRARIO Via Collina, 36
I-00187 Roma(IT)

(54) An oenological multipurpose machine for making wine and sparkling.

(57) A multipurpose wine industry machine for exploiting all the steps concerning the oenological technology of the wine making and sparkling, which machine includes: a substantially cylindrical pressure holding or autoclave (1) with horizontal axis, provided with means for the gastight closure and at its ends with means (4,5) (24,25) selectively intended for effecting the charging and discharging of the products to be treated; an engine assembly (12) adapted for rotating said autoclave in both directions; a double Archimedes screw (30) located inside the autoclave and intended for conveying the solid and/or the sediments from one to other end of the same autoclave, depending on the rotation of the latter and a space by which the autoclave is surrounded, which space is fit for effecting any cooling or heating treatment.

*FIG.1*

0246202

# AN OENOLOGICAL MULTIPURPOSE MACHINE
# FOR MAKING WINE AND SPARKLING

The present invention is concerned with the field of the oenological machines.More particularly, the invention is referred to a machine for effecting all the wide range of operations for producing either common wines or sparkling wines in as much as it combines the structure of a wine maker and of an autoclave.

The machinery intended for the oenologic activity both of the handicraft character and of industrial character,is the object of uninterrupted studies and experiments whereby at the present it appears extremely difficult to trace with enaugh accuracy the technological level actually attained, mainly because such kind of production shows a very wide quality and quantites difference.In a very wide field it can be stated that the presently used machinery comprises mainly the vertical and the horizontal wine makers.In the first case of wine makers,these are generally cylindrical stationary containers which have within their insides various kinds of more or less complicated means intended for moving the sediment component (such as must,grape stalks, grape skins, grape-pips etc) within the container and remove them out of it.

In the horizontal wine makers similar to the preceding ones, the movement of the solid and sedimennents is trusted in some cases to the container rotation which may be simultaneously coupled to the container balancing whereby the rotation axis gradually changes from a substantially horizontal position to a position which is bent downwards ,the container floating in a tank.

For those treatments which imply inner pressure increases and temperature changes (cooling or heating) autoclaves are used which in a smaller or larger degree aid or replace the action of the above machines.

A purpose of this invention is to make an oenological multipurpose machine which is mechanically simple and higly efficient and is intended for effecting all the main steps of the oenological technique from wine making and wine sparkling.Specifically the purpose of the invention is that of obtaining, along with the advantages which are specific of the continuous rate operation, a single machine whereby all the following wine making operations can be effected (either in the presence or in the absence of grape stalks and/or skins): carbonation, stocking, fermentation for fizzy and/or sparkling wines,tartar stabilization,refinement and sparkling (charmat) wines without any final filtering.

According to the invention this has been obtained by combining the features of an autoclave and a wine maker. Therefore an oenological machine is provided including : a container or cylindrical tank adapted for being subjected to pressure with horizontal axis which has at its ends a means for charging and discharging the products to be treated which tank is rotatably mounted on a supporting frame; a motor assembly adapted for selectively rotating in both directions said tank;a double screw mounted within the tank and intended for conveying the tank content from one to the other of the tank ends depending on its rotation; a space by which the tank is surrounded which space is adapted for effecting the cooling and heating treatment of the tank content.

Said assembly for rotating the tank comprises a motor with hydrostatic pump mounted on said frame which motor carries a driving roller which acts by friction on a circumferential race attached around the tank near one end of the same which race cooperates with a pair of idle rollers,which also are supported by the tank base.Another sliding ring being attached at the other end of the tank.

The invention will be now described with reference to the attached drawings which illustrate as a non limitative example a preferred embodiment of the same invention.

In the drawings:

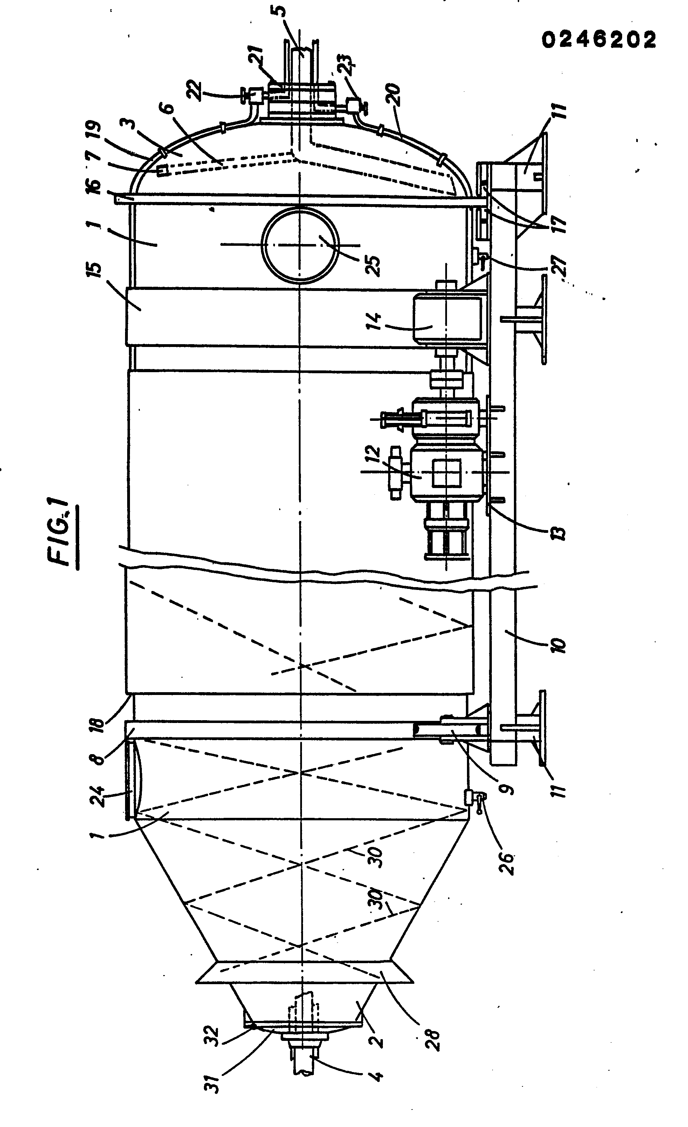

Fig.1 is a side perspective view of the machine;

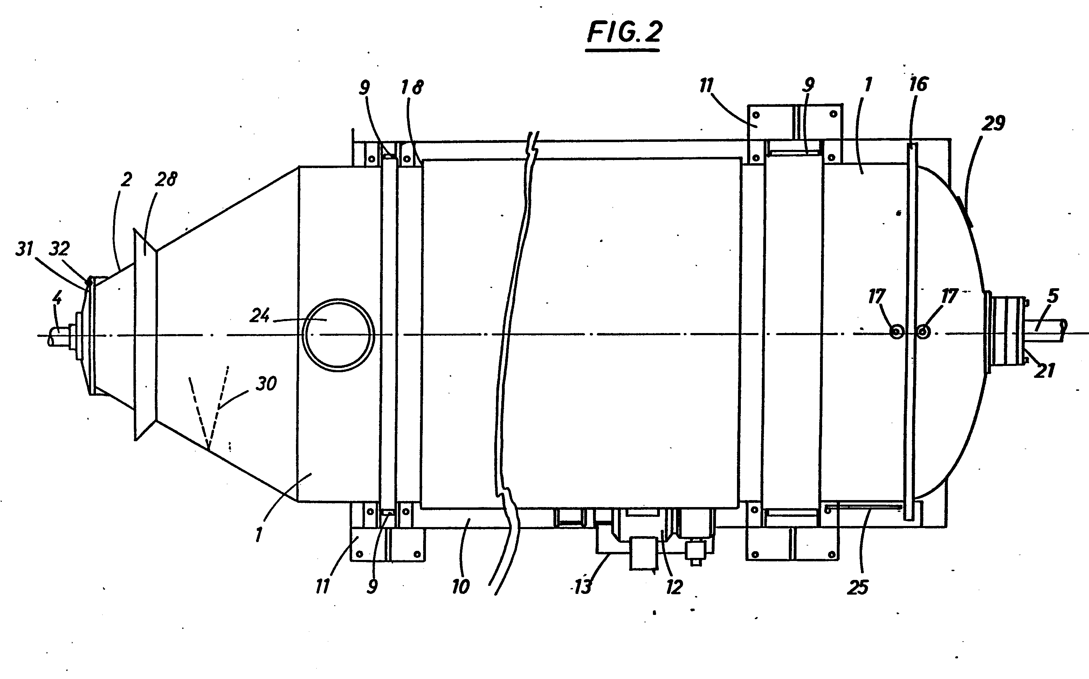

Fig.2 is a plan view from above.

With reference to the drawings,number 1 will show the container or rotating tank,comprising a substantially cylindrical body which shows a frusto-conical front end 2 and a rear dome shaped end 3.The front end is closed and is provided with a discharge duct 4 while the rear end which is also sealed,is provided with a suction duct 5.Pipe 6 is provided with a suction duct 5.Pipe 6 is provided with a vent valve 7 which serves for the discharge of the fermentation

0246202

gases.

Tank 1,near its front end,carries a rall ring 8 attached to the tank body which ring rests on a pair of idle rollers mounted on a frame of the tank base 10 which base is formed with strong metal shapes and is provided with rest feet 11.The tank rotation is obtained by a motor 12 which rests on a bracket 13 attached to frame 10 by means of a roller 14 which engages by friction a race 15 integral with tank 1.It is to be remarked that race 15,while fabricating the tank,is turned with the latter whereby a transmission is obtained which is totally free from vibration and noise differently from what happens with sprocket chain or rack presently used.Near to the tank end a rear ring 16 is provided which fits between two thrust bearings 17 which are mounted on the base frame 10 and which are intended for preventing possible axial movements of the tank.

A space 18 is provided around the middle portion of tank 1 through which space a fluid is circulated for effecting the thermal treatments (cooling or heating).The inlet and outlet of said fluid is through pipes 19 and 20 which connect to rotary distributor 21 and which are provided respectively with cocks 22 and 23.

The charging and discharging of the treatment products can be effected either through ducts 4 and 5 while the tank is rotating or through doors 24 and 25 while the tank is stopped which doors are provided with safety opening and closing devices.

According to an important feature of the present invention, duct 4 is mounted on a sealed hatchway 31 which is pressure tight and can be opened by rotating it sidewise around hinge 32.

Said hatchway 31 permits the feeding of fresh raisin intended for carbonic maceration whereby more than 50% of the tank capacity can be filled.

Two cocks are also provided for the front 26 and rear 27 discharge,a drop preventing collar 28 which is located near to the front end of tank 1,and an inspecting porthole 29.

Within tank 1 a double screw feeder 30 is included which is shown by a dash line in drawing 1.The purpose of said double screw 30 is for conveying the heavier components either towards the neck or towards the bottom of the tank,depending on the rotation direction of the tank.Lastly it is to be noted that the machine frame 10 can be provided with wheels,in order that the machine can be moved from a room to another;this depending on the treatment.

From the above the multiple operation abilities of the machine clearly appear;in fact it can operate within a wide temperature and pressure ranges,it lends itself to wine making processing,maceration, tartar stabilization, fizzing, sparkling and various operating steps such as dwelling, contacting, stocking, charging and discharging in continuous either from the front and from the back according to the treatments which are to be performed.

The machine can also be used,in addition to the simple wine making and related cellar operations such as clarification, dregs cleaning, dwelling and so on of the various products (musts,sulphurated musts, concetrated musts, wines, fizzy wines etc) also as

sparkling autoclave which allows to follow the Charmat method combined with Champenois method. In fact the rotation to which the autoclave is subjected permits the displacing, as already stated, of the dreg sediment either all towards the tank neck or all towards the tank bottom whereby the classic "remuage" to which the bottles are subjected after the maturing step is thus replaced.

Alternated rotations of the tank can be effected either rightwise or leftwise while a vibration movement can be applied at predetermined intensity and frequency by means of a suitable vibrator. This is made with the purpose of detaching from the tank vertical walls the dregs adhering thereto. The latter being collected at the tank bottom are driven towards the outlet by the combined action of the double Archimedean screw 30 and due to the slight inclination of the tank rotation axis (about 1-2 %) .A final product is thus obtained which can be bottled without any need of passing it through filters nor loosing pressure nor natural gases ($CO_2$) because it is suitably cooled by space 18.

The present invention has been illustrated and described in a preferred embodiment thereof;however it is clear that several structural variants can be introduced in practice which are within the scope of the present invention.

CLAIMS

1)      An oenological multipurpose machine characterized by the fact of comprising a wine making vessel adapted for standing a pressure included between 6 and 9 atmosphere (autoclave for sparkling) ,said vessel being provided with means adapted for imparting a rotary motion thereto and with means adapted for introducing, displacing and expelling the solid parts being worked, the whole having the purpose of carrying out in a single machine the operations of general wine-making in the presence or absence of raisin skin and/or grape stalks,carbonic maceration stocking, fermentation for fizzy and/or sparkling wines, tartar stabilization, refinement and wine sparking processes with no final filtration.

2)      An oenological multipurpose machine according to claim 1 characterized by the fact of comprising: an autoclave having the shape of a cylindrical tank (1) with a substantially horizontal axis and which is provided at its two ends with tight means for charging and/or discharging the products to be treated,which tank is rotatably mounted on a supporting frame (10) ; a motor (12) assembly adapted for rotating said autoclave selectively in its two directions, a double Archimedean screw (30) attached within the autoclave and intended for conveying the tank content fron one to the other of the tank ends this depending on the rotation direction; a space (18) which the autoclave is surrounded  and which allows for the cooling and heating treatments of the tank content.

3)      A machine according to claims 1,2 characterized by the fact that the autoclave rotation is obtained by means of a motor (12), which is mounted on said frame and provided with a roller (14) which acts by friction on a roll race (15) which is attached circumferentially at the outside of the autoclave (1).

4) A machine according to the claims 1-3 characterized by the fact that near to the front end, the autoclave carries a roll ring (8) which rests on idle rolls (9) carried by the frame (10).

5) A machine according to claims 1-4 characterized by the fact that at the two ends of the autoclave, at the neck and the bottom respectively thereof, two ducts (4,5) are provided, which connect with the inside of the autoclave and are intended for selectively charging the products to be treated and discharging the treated products during the autoclave rotation.

6) A machine according to claims 1-5 characterized by the fact that at the end of the neck of the autoclave this is provided with a hatchway (31) on which one of said ducts is mounted, which hatchway, being sealed and standing to pressure is rotatable on hinges in order to permit the tank feeding, both while the machine is stopped and while the machine is moving, with the fresh raisin being destined to the carbonic maceration.

7) A machine according to claims 1-6 characterized by the fact that said autoclave is provided with portholes, with safety locks, for charging and discharging with motor at rest.

8) A machine according to claims 1-7 characterized by the fact that said space for the thermic treatments of cooling and heating is connected by means of inlet and return ducts with a rotating device (21), so that thermic changes can be made during the autoclave rotation.

9) A machine according to claims 1-8 characterized by the fact that said autoclave is provided with means for the total discharge, the safety the inspection and the cleaning.

10) A machine according to claims 1-9 characterized by the fact that said frame can be equipped with wheels for permitting an easy transfer of the same machine into the rooms adapted for the various treatments to be performed.

11) An oenology multipurpose machine according to claims 1-10 substantially as described and illustrated.

## FIG.1

0246202

FIG.2

**European Patent Office**

## EUROPEAN SEARCH REPORT

Application number

EP 87 83 0163

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 867 550 (W.S. TAYLOR) <br><br> * Figures; claims; column 2, line 18 - column 3, line 37 * | 1,3,4, 8,9,11 | C 12 G 1/02 |
| Y | | 1,2,6 | |
| Y | | 2 | |
| X | FR-A-2 382 382 (J.C. RAYNA) <br><br> * figures; claims * | 1,3-7, 9,11 | |
| Y | | 2 | |
| Y | FR-A-1 004 626 (CENTRE NATIONAL DE LA RECHERCHE SCIENTIFIQUE) <br> * Figures; résumé; page 1, column 1, line 30 - page 1, column 2, line 29 * | 1,2,6 | **TECHNICAL FIELDS SEARCHED (Int. Cl.4)** <br><br> C 12 G <br> C 12 M |
| A | FR-A-1 048 951 (A. BRUYERE et al.) | 1,10 | |
| A | FR-A-2 369 978 (J.C. RAYNA) <br> * Figures; claims * | 1,6 | |
| | --- -/- | | |

The present search report has been drawn up for all claims

| Place of search | Date of completion of the search | Examiner |
|---|---|---|
| THE HAGUE | 19-08-1987 | COUCKE A.O.M. |

0246202

| European Patent Office | **EUROPEAN SEARCH REPORT** | | |

## DOCUMENTS CONSIDERED TO BE RELEVANT

Page  2

| Category | Citation of document with indication, where appropriate, of relevant passages | Relevant to claim | CLASSIFICATION OF THE APPLICATION (Int. Cl.4) |
|---|---|---|---|
| A | FR-A-2 481 787  (SOCIETE D'EXPLOITATION DES TECHNIQUES THERMIQUES ET FRIGORIFIQUES POUR LA VINIFICATION) * Claims * | 1,2,10 | |
| | ----- | | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 19-08-1987 | COUCKE A.O.M. |